Europäisches Patentamt

European Patent Office

Office européen des brevets

(19)

(11) Veröffentlichungsnummer: **0 358 258**
**A2**

(12) **EUROPÄISCHE PATENTANMELDUNG**

(21) Anmeldenummer: 89202155.1

(22) Anmeldetag: 24.08.89

(51) Int. Cl.⁵: **G01D 5/34**

(30) Priorität: 27.08.88 DE 3829103

(43) Veröffentlichungstag der Anmeldung:
14.03.90 Patentblatt 90/11

(84) Benannte Vertragsstaaten:
**DE FR GB**

(71) Anmelder: **Philips Patentverwaltung GmbH**
**Wendenstrasse 35 Postfach 10 51 49**
**D-2000 Hamburg 1(DE)**
(84) **DE**

Anmelder: **N.V. Philips' Gloeilampenfabrieken**
**Groenewoudseweg 1**
**NL-5621 BA Eindhoven(NL)**
(84) **FR GB**

(72) Erfinder: **Martens, Gerhard, Dr.**
**Breslauer Strasse 40**
**D-2359 Henstedt-Ulzburg(DE)**
Erfinder: **Kordts, Jürgen**
**Schinkelring 63a**
**D-2000 Norderstedt(DE)**

(74) Vertreter: **Kupfermann, Fritz-Joachim,**
**Dipl.-Ing. et al**
**Philips Patentverwaltung GmbH**
**Wendenstrasse 35 Postfach 10 51 49**
**D-2000 Hamburg 1(DE)**

(54) **Optische Sensoranordnung.**

(57) Die Erfindung bezieht sich auf eine optische Sensoranordnung mit einer Lichtsendeanordnung (2), die einen ersten Sendelichtstrahl in einen ersten Sendelichtleiter (3) und einen zweiten Sendelichtstrahl in einen zweiten Sendelichtleiter einspeist, mit einem Polarisator (5), der mit den beiden Sendelichtleitern gekoppelt ist und aus dem ersten und zweiten Sendelichtstrahl jeweils einen linear polarisierten Polarisatorlichtstrahl erzeugt, und mit einem optischen Sensor (1), der den Polarisationszustand eines zugeführten Polarisatorlichtstrahls in Abhängigkeit einer auf den Sensor einwirkenden physikalischen Größe ändert und der einen aus einem Polarisatorlichtstrahl gebildeten Sensorlichtstrahl liefert. Hinter dem optischen Sensor (1) ist ein Analysator (7) angeordnet, der jeden Sensorlichtstrahl in zwei linear polarisierte Empfangslichtstrahlen trennt, von denen einer über einen ersten Empfangslichtleiter (9) und der andere über einen zweiten Empfangslichtleiter (11) einer Lichtempfangsanordnung (12) zugeführt wird. Aus den Empfangslichtstrahlen bildet die Lichtempfangsanordnung elektrische Signale, aus denen eine Auswerteschaltung (13) die physikalische Größe ermittelt.

# Optische Sensoranordnung

Die Erfindung bezieht sich auf eine optische Sensoranordnung nach den Merkmalen des Oberbegriffs des Patentanspruches 1.

Eine solche optische Sensoranordnung ist aus der Fig. 2 der EP-A 0 175 358 bekannt. Hierbei leitet eine erste Lichtquelle einen ersten Sendelichtstrahl über einen ersten Koppler und eine Mikrolinse in einen ersten Lichtleiter. Am anderen Ende des Lichtleiters wird der Sendelichtstrahl über eine zweite Mikrolinse in einen Polarisationsteiler eingestrahlt. Der Polarisationsteiler erzeugt aus dem Sendelichtstrahl einen linear polarisierten Lichtstrahl, der auf einen optischen Sensor gegeben wird. Der polarisierte Lichtstrahl ändert seinen Polarisationszustand in Abhängigkeit einer auf den Sensor einwirkenden physikalischen Größe, z.B. durch Druck oder ein elektrisches oder magnetisches Feld. Über eine Verzögerungsplatte mit einer Verzögerung von einer Achtelwellenlänge wird der vom Sensor abgegebene Lichtstrahl auf einen Spiegel gestrahlt, der diesen reflektiert. Über die Verzögerungsplatte und den optischen Sensor wird der reflektierte Lichtstrahl auf den Polarisationsteiler gestrahlt, der zwei linear polarisierte Lichtstrahlen erzeugt. Der erste linear polarisierte Lichtstrahl wird über den ersten Lichtleiter dem ersten Koppler zugeleitet, der den Lichtstrahl umlenkt und in einen ersten Fotodetektor führt. Der zweite linear polarisierte Lichtstrahl wird über eine Mikrolinse in einen zweiten Lichtleiter eingestrahlt und über eine weitere Mikrolinse einem zweiten Koppler zugeleitet, der den Lichtstrahl in einen zweiten Fotodetektor strahlt.

Bei der bekannten Anordnung wird ein zweiter Sendelichtstrahl, der zeitlich dem ersten Sendelichtstrahl nachfolgt, von einer zweiten Lichtquelle in den zweiten Lichtleiter eingestrahlt. Nachdem der von der zweiten Lichtquelle erzeugte Lichtstrahl den Polarisationsteiler, den optischen Sensor und die Verzögerungsplatte durchlaufen hat, wird der am Spiegel eintreffende Lichtstrahl reflektiert. Nach der Reflexion zerlegt der Polarisationsteiler den reflektierten Lichtstrahl in zwei linear polarisierte Lichtstrahlen und strahlt jeweils einen linear polarisierten Lichtstrahl in jeden der beiden Lichtleiter ein. Nach Durchlaufen der Koppler werden die linear polarisierten Lichtstrahlen von jeweils einem Fotodetektor empfangen. Aus den insgesamt vier in elektrische Signale umgesetzten Lichtintensitäten der von den beiden Fotodetektoren empfangenen Lichtstrahlen wird in einer Rechenschaltung ein Maß für die physikalische Größe berechnet, das unabhängig von der Dämpfung der Lichtleiter ist.

Bei dieser bekannten optischen Sensoranordnung treten Reflexe an optischen Grenzflächen auf (z.B. die Grenzflächen an den Polarisationsteilern, den Mikrolinsen, dem Sensorelement und gegebenenfalls an den Steckerverbindungen für die Lichtleiter), die sich den Lichtstrahlen an den Fotodetektoren (Lichtempfangsanordnung) überlagern. Aufgrund dieser Reflexe wird das Meßergebnis verfälscht. Außerdem müssen zusätzlich zur Trennung von reflektierten und transmittierten Lichtstrahlen Koppler verwendet werden, bei denen ein zusätzlicher Lichtverlust durch Dämpfung im Koppler und durch die Lichtaufteilung des Kopplers auftritt.

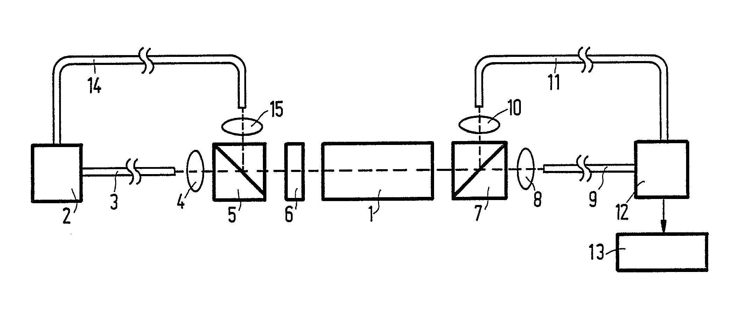

Aus der Fig. 3 der EP-A 0 175 358 ist weiter noch eine optische Sensoranordnung bekannt, bei der ein halbdurch lässiger Spiegel verwendet wird. Hierbei ist an einem Ende eines ersten Lichtleiters ein Koppler angeschlossen, der einen Lichtstrahl von einer ersten Lichtquelle empfängt und einen Lichtstrahl an einen ersten Fotodetektor sendet. Zwischen dem anderen Ende des ersten Lichtleiters und dem halbdurchlässigen Spiegel ist ein Polarisationsteiler, der einen linear polarisierten Lichtstrahl erzeugt, ein optischer Sensor und eine Verzögerungsplatte angeordnet. Der Spiegel reflektiert einen Teil des Lichtstrahls und läßt den anderen Teil durch. Auf der anderen Seite des Spiegels ist ein zweiter Lichtleiter angeschlossen, der zu einem zweiten Koppler mit Lichtquelle und Fotodetektor führt. Über die beiden Lichtleiter werden, wie bei der Anordnung nach Fig. 2, Lichtstrahlen zeitversetzt ausgesendet. Auch hierbei treten Reflexe an optischen Grenzflächen auf.

Der Erfindung liegt daher die Aufgabe zugrunde, eine optische Sensoranordnung zu schaffen, bei der keine Reflexe an eine Lichtempfangsanordnung gelangen.

Diese Aufgabe wird bei einer optischen Sensoranordnung der eingangs genannten Art durch die kennzeichnenden Merkmale des Patentanspruches 1 gelöst.

Bei der erfindungsgemäßen optischen Sensoranordnung wird der linear polarisierte, den Polarisator verlassende Polarisatorlichtstrahl durch Doppelbrechung im optischen Sensor, welche durch die physikalische Größe hervorgerufen wird, in einen Sensorlichtstrahl mit gegenüber dem linear polarisierten Polarisatorlichtstrahl veränderten, von der physikalischen Größe abhängigen Polarisationszustand umgewandelt. Der Sensorlichtstrahl wird dann von einem Analysator in zwei linear polarisierte Empfangslichtstrahlen aufgetrennt. Einer der Empfangslichtstrahlen wird über einen ersten und der andere Empfangslichtstrahl über einen zweiten Empfangslichtleiter zu einer Lichtempfangsanordnung geführt. Aus den beiden von der Lichtsendeanordnung erzeugten Sendelichtstrahlen werden vier Empfangslichtstrahlen gebildet, die in der der Lichtempfangsanordnung nachgeschalteten Auswerteschaltung so verknüpft werden, daß die physikalische Größe ohne die durch die Lichtleiter erfolgte Dämpfung ermittelbar ist. Es gelangen keine Reflexe zur Lichtempfangsanordnung, welche die Messung verfälschen. Auch ist in der Anordnung kein Koppler vorhanden, so daß auch keine zusätzlichen Verluste auftreten.

Als optischer Sensor können lichtdurchlässige Körper verwendet werden, in denen durch Einwirkung einer Meßgröße eine Doppelbrechung induziert wird. Solche lichtdurchlässigen Körper können beispielsweise aus speziellen Kunststoffen, speziellen Kristallen oder Gläsern bestehen. In dem optischen Sensor kann entweder eine lineare oder zirkulare Doppelbrechung induziert werden. Durch die lineare Doppelbrechung wird aus einem linear polarisierten Lichtstrahl ein elliptisch polarisierter Lichtstrahl erzeugt. Bei der zirkularen Doppelbrechung bleibt der Lichtstrahl linear polarisiert der Vektor dieses linear Polarisierten Lichtstrahles dreht sich dagegen.

In einer Weiterbildung der Erfindung ist vorgesehen, daß Polarisator und Analysator als Polarisationsteilerwürfel ausgebildet sind. Die in einen Polarisationsteilerwürfel ein- bzw. austretenden Lichtstrahlen stehen senkrecht aufeinander. Die Sendebzw. Empfangslichtleiter sind also senkrecht zueinander angeordnet. Beruht der Meßeffekt auf einer induzierten linearen Doppelbrechung im optischen Sensor müssen die beiden Polarisationsteilerwürfel so angeordnet werden, daß die Durchlaßrichtungen senkrecht oder parallel zueinander gestellt sind. Für Meßeffekte auf der Basis zirkularer induzierter Doppelbrechung im optischen Sensor müssen die Polarisationsteilerwürfel so angeordnet werden, daß ihre Durchlaßrichtungen um 45° versetzt zueinander gestellt sind. Als Polarisator bzw. Analysator können auch andere, teurere Polarisationsteiler verwendet werden, z.B. Wollaston-, Rochon- oder Kalkspatprismen oder Glan-Polarisatoren oder Foster-Strahlteiler.

Bei optischen Sensoren auf der Basis linearer Doppelbrechung ist vorgesehen, daß zwischen Polarisator und Analysator eine Verzögerungsplatte mit einer Verzögerung zwischen einer Viertel- und Achtelwellenlänge angeordnet ist. Die Verzögerungsplatte bewirkt, daß der aus dem Polarisator austretende linear polarisierte Polarisationslichtstrahl bzw. der aus dem optischen Sensor austretende elliptisch polarisierte Sensorlichtstrahl eine definierte feste zusätzliche Polarisatonsänderung erhält, um eine vereinfachte Auswertung der empfangenen Signale zu bekommen (Arbeitspunkteinstellung).

Um eine Meßauswertung vornehmen zu können, muß die Auswerteschaltung eindeutig die Empfangslichtstrahlen den Sendelichtstrahlen zuordnen können. Daher ist vorgesehen, daß entweder die Lichtsendeanordnung den ersten und zweiten Sendelichtstrahl zeitlich abwechselnd in den ersten bzw. zweiten Sendelichtleiter einspeist oder daß die Lichtsendeanordnung die Intensität des ersten Sendelichtstrahls mit einem ersten Modulationssignal mit einer ersten Frequenz und die Intensität des zweiten Sendelichtstrahls mit einem zweiten Modulationssignal mit einer zweiten Frequenz amplitudenmoduliert und beide zeitgleich in den ersten und zweiten Sendelichtleiter einspeist.

In der Auswerteschaltung wird nach Umwandlung der Lichtstrahlen in elektrische Signale ein Maß für die physikalische Größe aus den elektrischen Signalen für die Intensität der Empfangslichtstrahlen ermittelt. Dabei wird das Verhältnis der Produkte $I_{11} \cdot I_{22}$ und $I_{21} \cdot I_{12}$ gebildet, wobei $I_{11}$ die Intensität des in den ersten Empfangslichtleiter eingestrahlten und von dem ersten Sendelichtstrahl abgeleiteten Empfangslichtstrahl ist, $I_{22}$ die Intensität des in den zweiten Empfangslichtleiter eingestrahlten und von dem zweiten Sendelichtstrahl abgeleiteten Empfangslichtstrahl ist, $I_{21}$ die Intensität des in den zweiten Empfangslichtleiter eingestrahlten und von dem ersten Sendelichtstrahl abgeleiteten Empfangslichtstrahl ist und $I_{12}$ die Intensität des in den ersten Empfangslichtleiter eingestrahlten und von dem zweiten Sendelichtstrahl abgeleiteten Empfangslichtstrahl ist. Das Maß für die physikalische Größe kann also z.B. durch Berechnung der Gleichung $Q = I_{22} \cdot I_{22}/(I_{21} \cdot I_{12})$ bestimmt werden.

Ein Ausführungsbeispiel der Erfindung wird nachstehend anhand der Zeichnung näher erläutert.

In der Zeichnung ist eine optische Sensoranordnung mit einem optischen Sensor 1 dargestellt, mit dessen Hilfe z.B. ein Druck, ein elektrisches oder magnetisches Feld gemessen werden kann. Dabei wird von einer Lichtsendeanordnung 2 ein erster Sendelichtstrahl über einen Sendelichtleiter 3 zu einer Linse 4 gestrahlt, die aus dem divergenten Lichtbündel des Sendelichtstrahls ein paralleles Lichtbündel erzeugt. Der Linse 4 ist ein polarisator 5 nachgeordnet, der als Polarisationsteilerwürfel ausgebildet ist und aus dem ersten Sendelichtstrahl einen ersten linear polarisierten Polarisatorlichtstrahl erzeugt. Der aus dem Polarisator austretende erste linear polarisierte Polarisatorlichtstrahl passiert dann eine Verzögerungsplatte 6 mit einer Verzögerung von einer Viertelwellenlänge, bevor der erste Polarisatorlichtstrahl in den optischen Sensor 1 eintritt. Die Verzögerungsplatte 6 erzeugt dabei aus dem linear polarisierten Polarisatorlichtstrahl einen zirkular polarisierten Polarisatorlichtstrahl.

Der optische Sensor 1, der beispielsweise aus speziellem Kunststoff besteht, induziert bei Einwirkung einer physikalischen Größe (z.B. Druckbelastung) eine Doppelbrechung und erzeugt so aus dem zirkular polarisierten Polarisatorlichtstrahl einen elliptisch polarisierten Sensorlichtstrahl, der in einen Analysator 7 einstrahlt. Der Analysator 7, der aus einem Polarisationsteilerwürfel besteht, erzeugt aus dem elliptisch polarisierten Sensorlichtstrahl zwei linear Polarisierte Empfangslichtstrahlen, die über eine Linse 8 in einen ersten Empfangslichtleiter 9 und über eine Linse 10 in einen zweiten Empfangslichtleiter 11 eingekoppelt werden. Im Analysator 7 wird dabei der eine linear polarisierte Anteil des Sensorlichtstrahls um 90° gegenüber dem nicht abgelenkten anderen linear polarisierten Anteil des Sensorlichtstrahls umgelenkt. Die beiden Empfangslichtstrahlen werden über die Empfangslichtleiter 9 und 11 zu einer Lichtempfangsanordnung 12 geleitet, wo diese in elektrische Signale umgesetzt werden und einer Auswerteschaltung 13 zugeführt werden.

Von der Lichtsendeanordnung 2 wird noch ein zweiter Sendelichtstrahl über einen zweiten Sendelichtleiter 14 einer Linse 15 zugeleitet. Die Linse 15 bündelt den Sendelichtstrahl ebenfalls, bevor er in den Polarisator 5 eintritt. Im Polarisator 5 wird der Sendelichtstrahl um 90° umgelenkt und linear polarisiert, so daß ein zweiter linear polarisierter Polarisatorlichtstrahl über die Verzögerungsplatte 6 in den optischen Sensor 1 einstrahlt. Nach Durchlaufen der Verzögerungsplatte 6 und des optischen Sensors 1 wird auf den Analysator 7 ein zweiter Sensorlichtstrahl geleitet, der von diesem wieder in zwei linear polarisierte Empfangslichtstrahlen aufgetrennt wird, die in die beiden Empfangslichtleiter 9 und 11 eingekoppelt werden. Die Empfangslichtleiter 9 und 11 führen der Lichtempfangsanordnung ebenfalls die von dem zweiten Sendelichtstrahl herstammenden Empfangslichtstrahlen zu, die in der Lichtempfangsanordnung 12 in elektrische Signale umgewandelt werden und der Auswerteschaltung 13 zugeführt werden.

Die Lichtsendeanordnung 2 kann den ersten und zweiten Sendelichtstrahl zeitlich abwechselnd in den ersten bzw. zweiten Sendelichtleiter einspeisen oder zwei Sendelichtstrahlen erzeugen, deren Intensitäten durch zwei Modulationssignale mit unterschiedlichen Frequenzen amplitudenmoduliert sind und beide gleichzeitig in die Sendelichtleiter 3 und 14 einkoppeln.

Da der zweite Sendelichtstrahl gegenüber dem ersten Sendelichtstrahl im Polarisator 5 um 90° umgelenkt wird, stehen die Enden der Sendelichtleiter 3 und 14 an ihren den Linsen 4 und 15 zugewandtem Ende senkrecht aufeinander. Ebenfalls stehen die Enden der Empfangslichtleiter 9 und 11 senkrecht aufeinander. Der Polarisator 5 und der Analysator 7 können entweder in paralleler oder gekreuzter Stellung ausgerichtet sein. Eine optische Achse der Verzögerungsplatte 6 steht entweder parallel oder senkrecht zu einer Hauptachse des optischen Sensors 1. Die optische Achse der Verzögerungsplatte 6 steht bezüglich der Richtung des Polarisationsvektors des linear polarisierten Polarisatorlichtstrahls um 45° gedreht.

In der Auswerteschaltung 13 wird ein Maß Q für die zu bestimmende Physikalische. Größe aus den elektrischen Signalen ermittelt. Hierbei werden die elektrischen Signale, welche proportional der Lichtintensität der Empfangslichtstrahlen sind, aus der folgenden Gleichung ermittelt $Q = I_{11} I_{22}/(I_{21} I_{12})$. $I_{11}$ ist die Intensität des in den ersten Empfangslichtleiter 9 eingestrahlten und von dem ersten Sendelichtstrahl abgeleiteten Empfangslichtstrahl ist, $I_{22}$ ist die Intensität des in den zweiten Empfangslichtleiter 11 eingestrahlten und von dem zweiten Sendelichtstrahl abgeleiteten Empfangslichtstrahl, $I_{21}$ ist die Intensität des in den zweiten Empfangslichtleiter 11 eingestrahlten und von dem ersten Sendelichtstrahl abgeleiteten Empfangslichtstrahl und $I_{12}$ ist die Intensität des in den ersten Empfangslichtleiter 9 eingestrahlten und von dem zweiten Sendelichtstrahl abgeleiteten Empfangslichtstrahl. Das Maß Q für die physikalische Größe ist unabhängig von den Dämpfungsverlusten in den beiden Sendelichtleitern 3 und 14 und den beiden Empfangslichtleitern 9 und 11.

Es hat sich in der Praxis gezeigt, daß die optische Sensoranordnung gegenüber Temperaturveränderungen unempfindlich ist und daß keine Reflexe zur Lichtempfangsanordnung 12 gelangen und dadurch die optische Sensoranordnung auch für sehr präzise Messungen geeignet ist.

**Ansprüche**

1. Optische Sensoranordnung mit einer Lichtsendeanordnung (2), zum Einspeisen eines ersten Sendelichtstrahls in einen ersten Sendelichtleiter (3) und eines zweiten Sendelichtstrahls in einen zweiten Sendelichtleiter (14), mit einem mit den beiden Sendelichtleitern gekoppelten Polarisator (5) zum Erzeugen eines linear polarisierten Polarisatorlichtstrahls jeweils aus dem ersten und zweiten Sendelichtstrahl, und mit einem optischen Sensor (1) zum Ändern des Polarisationszustands eines zugeführten Polarisatorlichtstrahls in Abhängigkeit einer auf den Sensor einwirkenden physikalischen Größe und zum Liefern eines aus einem Polarisatorlichtstrahl gebildeten Sensorlichtstrahls, dadurch gekennzeichnet, daß hinter dem optischen Sensor (1) ein Analysator (7) angeordnet ist, zum Trennen jedes Sensorlichtstrahls in zwei linear polarisierte Empfangslichtstrahlen, ein erster Empfangslichtleiter (9) und ein zweiter Empfangslichtleiter (11) und eine Lichtempfangsanordnung (12) zum Zuführen der Empfangslichtstrahlen zu der Lichtempfangsanordnung (12) zum Bilden von elektrischen Signalen aus den Empfangslichtstrahlen zum Ermitteln der physikalischen Größe in einer Auswerteschaltung (13).

2. Optische Sensoranordnung nach Anspruch 1,
dadurch gekennzeichnet, daß Polarisator (5) und Analysator (7) als Polarisationsteilerwürfel ausgebildet sind.

3. Optische Sensoranordnung nach einem der vorhergehenden Ansprüche,
dadurch gekennzeichnet, daß zwischen Polarisator (5) und Analysator (7) eine Verzögerungsplatte (6) mit einer Verzögerung zwischen einer Viertel- und Achtelwellenlänge angeordnet ist.

4. Optische Sensoranordnung nach einem der vorhergehenden Ansprüche,
dadurch gekennzeichnet, daß die Lichtsendeanordnung (2) angeordnet ist zum zeitlich abwechselnden Einspeisen des ersten und zweiten Sendelichtstrahls in den ersten bzw. zweiten Sendelichtleiter (3, 14).

5. Optische Sensoranordnung nach einem der Ansprüche 1 bis 3,
dadurch gekennzeichnet, daß die Lichtsendeanordnung (2) angeordnet ist zum Amplitudenmodulieren der Intensität des ersten Sendelichtstrahls mit einem ersten Modulationssignal mit einer ersten Frequenz und der Intensität des zweiten Sendelichtstrahls mit einem zweiten Modulationssignal mit einer zweiten Frequenz und zum zeitgleichen Einspeisen der beiden in den ersten und zweiten Sendelichtleiter (3, 14).

6. Optische Sensoranordnung nach einem der vorhergehenden Ansprüche,
dadurch gekennzeichnet, daß die Auswerteschaltung (13) angeordnet ist zum Ermitteln des Maßes für die physikalische Größe aus den elektrischen Signalen für die Intensität der Empfangslichtstrahlen durch Bilden des Verhältnisses der Produkte $I_{11} I_{22}$ und $I_{21} I_{12}$, wobei $I_{11}$ die Intensität des in den ersten Empfangslichtleiter (9) eingestrahlten und von dem ersten Sendelichtstrahl abgeleiteten Empfangslichtstrahl ist, $I_{22}$ die Intensität des in den zweiten Empfangslichtleiter (11) eingestrahlten und von dem zweiten Sendelichtstrahl abgeleiteten Empfangslichtstrahl ist, $I_{21}$ die Intensität des in den zweiten Empfangslichtleiter (11) eingestrahlten und von dem ersten Sendelichtstrahl abgeleiteten Empfangslichtstrahl ist und $I_{12}$ die Intensität des in den ersten Empfangslichtleiter (9) eingestrahlten und von dem zweiten Sendelichtstrahl abgeleiteten Empfangslichtstrahl ist.